# EUROPÄISCHE PATENTSCHRIFT

(11) **EP 3 303 052 B1**
(45) Veröffentlichungstag und Bekanntmachung des Hinweises auf die Patenterteilung: **19.06.2019**
(21) Anmeldenummer: 16739015.2
(22) Anmeldetag: 14.05.2016
(51) Int. Cl.: B64D 11/06, B63B 29/04, B61D 33/00, B60N 2/433, B60N 2/24, B60N 2/22, B60N 2/02, F16F 9/02, A47C 1/027

(54) **VORRICHTUNG ZUM AUSLÖSEN EINER GASFEDER UND SITZEINHEIT MIT VERSTELLBARER RÜCKENLEHNE MIT EINER GASFEDER UND EINER DERARTIGEN VORRICHTUNG**
DEVICE FOR RELEASING A GAS SPRING AND SEAT UNIT WITH ADJUSTABLE BACKREST WITH A GAZ SPRING AND SAID DEVICE
DISPOSITIF POUR LIBERER UN RESSORT A GAZ ET UNITÉ DE SIEGE AVEC DOSSIER REGLABLE ET RESSORT A GAZ COMPRENANT UN TEL DISPOSITIF

(30) Priorität: 05.06.2015 DE 202015003901 U
(43) Veröffentlichungstag der Anmeldung: 11.04.2018
(73) Patentinhaber: Wandschneider, Guido, 74927 Eschelbronn (DE)
(72) Erfinder: Wandschneider, Guido, 74927 Eschelbronn (DE)
(74) Vertreter: Clemens, Gerhard
(86) Internationale Anmeldenummer: PCT/DE2016/000208
(87) Internationale Veröffentlichungsnummer: WO 2016/192699

(56) Entgegenhaltungen:
- WO-A2-2015/010673
- GB-A- 2 138 102
- US-A- 5 090 770

## Beschreibung

### TECHNISCHES GEBIET

Die vorliegende Erfindung betrifft eine Vorrichtung zum Auslösen einer Gasfeder mit einer Betätigungseinrichtung, einem mit der Betätigungseinrichtung wirkverbundenen, unmittelbar auf einen endseitigen Auslöser der Gasfeder wirkenden Betätigungsorgan, wobei das Betätigungsorgan als kraft- und/oder wegmäßig unter- oder übersetzende Hebelanordnung ausgeführt ist, wobei einer der Hebel - Auslösehebel - unmittelbar auf den Auslöser drückt, wobei die Betätigungseinrichtung eine elektrische Magneteinheit aufweist, die über eine Stromversorgung mit elektrischer Energie versorgt wird und über eine Schalteinheit aktivierbar ist, wobei eine Steuereinrichtung vorhanden ist, die über die Schalteinheit aktivierbar ist und die die elektrische Magneteinheit in Abhängigkeit der Signale der Schalteinheit aktiviert, wobei die Ansteuerung der Magneteinheit derart erfolgt, dass für ein vorgegebenes Zeitintervall eine Übersteuerungsphase der Magneteinheit mit erhöhter Spannung und eine anschließende Haltephase mit verminderter Spannung erzeugt wird.

Die vorliegende Erfindung betrifft weiterhin eine Sitzeinheit mit verstellbarer Rückenlehne ("backrest recline") mit einer derartigen Vorrichtung und eine Anordnung mit mehreren Sitzeinheiten, jeweils mit einer derartigen Vorrichtung.

### STAND DER TECHNIK

Gasfedern sind in den unterschiedlichsten Ausführungsformen aus der Praxis bekannt. Zahlreiche Gasfedern umfassen ein integriertes Ventilsystem, wodurch sich die Gasfeder in jeder Position stufenlos feststellen bzw. blockieren lässt. Dabei ist der Kolben an einem Druckrohr abgedichtet und trennt zwei Gasräume voneinander. Bei geschlossenem Ventil ist die Gasfeder arretiert und ermöglicht eine Blockierung in der gewünschten Position. Durch Betätigung des meist als Auslösestössel ausgeführten Auslösers wird das Ventil geöffnet und die Gasfeder lässt sich so stufenlos positionieren. Die Ausschubgeschwindigkeit und Dämpfung kann dabei durch Wahl der Düse im Kolben entsprechend variiert werden.

Gasfedern der hier in Rede stehenden Art werden aufs unterschiedlichste angewendet. Aus der Praxis bekannt ist die Anwendung solcher Gasfedern in Schreibtischstühlen. Ebenso lassen sich durch Gasfedern Autositze oder Flugzeugsitze verstellen oder können Teile von Solarien bewegt werden. Auch lassen sich Schreibtische durch Gasfedern höhenverstellen.

Bei den aus der Praxis bekannten Gasfedern ist ein Betätigungsorgan erforderlich, welches mit einer Betätigungseinrichtung wirkverbunden ist und unmittelbar auf den endseitig der Gasfeder vorgesehenen Auslöser wirkt. Dabei werden beispielsweise bei Schreibtischstühlen Betätigungsorgane verwendet, die in Form einfacher Hebel ausgebildet sind, die in der Regel mit einem endseitigen Bereich unmittelbar auf den Auslöser drücken. Eine solche Ausgestaltung des Betätigungsorgans hat den enormen Nachteil, dass doch erhebliche Kräfte zum Auslösen der Gasfeder erforderlich sind. Hinzu kommt der weitere Nachteil, dass sich die Auslösung nur schwer dosieren lässt, so dass eine Regulierung der Gasfedergeschwindigkeit bei erheblichen Auslösekräften so gut wie nicht möglich ist.

Aus der EP 0 907 842 B1 ist eine gattungsgemäße Vorrichtung zum Auslösen einer Gasfeder der eingangs genannten Art bekannt. Das Betätigungsorgan der bekannten Vorrichtung umfasst neben dem Auslösehebel noch zwei weitere Hebel, die mit dem Auslösehebel schwenkbar gekoppelt sind. Als Betätigungseinrichtung ist dabei ein Bowdenzug eingesetzt. Weiterhin offenbart diese bekannte Vorrichtung die Alternative, dass die Betätigungseinrichtung über einen Magneten - elektrisch arbeitenden Hub- oder Druckmagnet - auf das Betätigungsorgan wirkt.

Des Weiteren sind aus der DE 197 16 720 A1 und aus der EP 1 328 738 B1 weitere Vorrichtungen zum Auslösen einer Gasfeder bekannt, bei denen ebenfalls ein Hebelmechanismus eingesetzt wird. Bei der aus der DE 197 16 720 A1 bekannten Vorrichtung sind zwei Hebel vorhanden, die über ein Kontaktbereich zusammenwirken. Die Wirkverbindung zwischen den Hebeln ist entweder über eine Verzahnung oder über aneinanderliegende Reibflächen realisiert. Die Vorrichtung gemäß der EP 1 328 738 B1 ist so ausgebildet, dass der Kontaktbereich und/oder der Betätigungshebel des Hebelmechanismus eine frei drehbare Rolle oder Kugel zum Abwälzen auf den Betätigungsbereich und/oder den Kontaktbereich aufweist.

Die WO 2015/010673 A2 offenbart eine weitere Ausführungsmöglichkeit der Vorrichtung zum Auslösen einer Gasfeder, die sich dadurch auszeichnet, dass an dem Gehäuse eine erste Anschlusseinheit zum Anschluss einer Betätigungseinrichtung vorhanden ist, die im Wesentlichen parallel zur Längsrichtung der Gasfeder verläuft und eine zweite Anschlusseinheit vorhanden ist, die im Wesentlichen quer zur Längsrichtung der Gasfeder verläuft.

In der US 5 090 770 A ist ein Sitzmöbel beschrieben, das eine Sitzverstelleinrichtung für die Sitzhöhe aufweist mit einem an die beiden gegeneinander zu verstellenden Sitzteile angreifenden Federelement, das als Druckfluidfeder ausgebildet ist, und mit einer Arretiervorrichtung zum lösbaren rückfedernd nachgiebigen Fixieren der beiden Sitzteile in der jeweils gewählten Verstellposition aufweist. Dabei wird ein elektrisches Betätigungselement für die Arretiervorrichtung eingesetzt, das an eine bedienbare elektrische Steuerung für die wenigstens eine Sitzverstellung angeschlossen ist, wobei das elektrische Betätigungselement als Hubmagnet ausgebildet ist.

Die GB 2 138 102 A offenbart einen Fahrzeugsitz mit einer pneumatischen Federlagerung. Dabei werden Sensoren zur Positionsbestimmung eingesetzt, die durch einen Magneten entsprechend der Bewegung des Sitzes aktiviert werden.

### DARSTELLUNG DER ERFINDUNG

Ausgehend von dem genannten Stand der Technik liegt der vorliegenden Erfindung die Aufgabe beziehungsweise das technische Problem zugrunde eine Vorrichtung zum Auslösen einer Gasfeder der eingangs genannten Art auszugestalten und weiterzubilden, die bei unterschiedlichsten geometrischen Platzverhältnissen der umgebenden Bauteile eingesetzt werden kann, die wirtschaftlich hergestellt werden kann, die eine dauerhaft zuverlässige Funktion gewährleistet, die raumsparend ausgebildet ist und die variabel den jeweiligen Anforderungen anpassbar ist und zudem erhöhten Sicherungsanforderungen genügt.

Der vorliegenden Erfindung liegt weiterhin die Aufgabe zugrunde eine Sitzeinheit mit einer verstellbaren Rückenlehne ("backrest recline") beziehungsweise eine Anordnung von Sitzeinheiten anzugeben, die einen hohen Sicherheitsstandard aufweist und eine raumsparende Anordnung ermöglicht.

Die erfindungsgemäße Vorrichtung zum Auslösen einer Gasfeder ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Sitzeinheit beziehungsweise Anordnung von Sitzeinheiten ist durch die Merkmale der Ansprüche 11, 12 beziehungsweise 13 gegeben.

Der erfindungsgemäße Vorrichtung zeichnet sich dadurch aus, dass die Steuereinrichtung so ausgebildet ist, dass die Dauer des Zeitintervalls der Übersteuerungsphase und / oder die Höhe der Spannung im Zeitintervall der Übersteuerungsphase und/oder die Höhe der Spannung in der an die Übersteuerungsphase anschließenden Haltephase fest vorgebbar oder - abhängig vom Einsatzfall - variabel programmierbar ist.

Durch die erfindungsgemäße Ausbildung der Steuereinrichtung wird eine dauerhaft zuverlässige Funktion gewährleistet, wobei die zur Bedienung der Gasfeder erforderlichen Kräfte problemlos erzeugt und umgesetzt werden können, zusätzliche mechanische Bauteile wie ein Bowdenzug entfallen können und eine gewünschte Dosierung der erforderlichen Kräfte zur Erzeugung der gewünschten Funktion problemlos umgesetzt werden können.

In den praktischen Fällen in denen eine Vielzahl von Vorrichtungen vorhanden ist, beispielsweise in der Sitzanordnung einer Innenkabine eines Flugzeuges, und in denen eine Stromversorgung mit nicht allzu hohen Kapazitäten zur Verfügung steht, kann es vorteilhaft sein, um eine Überlastung der Energieversorgung zu verhindern, die Dauer des Zeitintervalls der Übersteuerungsphase auf wenige Millisekunden, beispielsweise unter 10 Millisekunden, festzulegen. Bei anderen Einsatzfällen und abhängig von den Kapazitäten der Stromversorgung und den eingesetzten Magneteinheiten kann auch eine wesentlich größere Zeitdauer festgelegt werden. Hierzu ist die Steuereinrichtung programmierbar ausgestaltet, so dass diese Zeitdauer an den jeweiligen Einsatzfall optimal angepasst werden kann.

In praktischen Einsatzfällen beträgt die Spannung im Zeitintervall der Übersteuerungsphase beispielsweise 6, 12, 18, 24 oder 28 Volt und die Spannung in der an die Übersteuerungsphase anschließenden Haltephase beträgt 6 Volt. Dies sind jedoch lediglich beispielhafte Volt-Angaben, die aus praktischen Tests resultieren. Die Voltzahlen können von den genannten Zahlen nach oben oder unten abweichen, je nach Einsatzzweck, vorhandenem Stromnetz und eingesetzten Magneteinheiten.

Um eine Überlastung des Stromnetzes beim Aktivieren der Gasfeder, insbesondere bei Vorhandensein von mehreren Vorrichtungen, zu verhindern, zeichnet sich eine besonders vorteilhafte Ausgestaltung dadurch aus, dass die Vorrichtung eine erste elektrische Pufferspeichereinheit und/oder eine getrennt von der Vorrichtung an die Spannungsversorgung direkt angeschlossene zweite Pufferspeichereinheit aufweist, aus der die Steuereinrichtung bei Aktivierung während der Übersteuerungsphase zumindest teilweise oder ganz die elektrische Energie für die Magneteinheit abruft.

Die elektrische Pufferspeichereinheit ist bevorzugt als Kondensator oder Akkumulator ausgebildet, was eine ökonomische Herstellung, eine dauerhaft zuverlässige Funktion und einen einfachen Betrieb gewährleistet.

Der Einsatz einer zweiten Pufferspeichereinheit, die eine besonders hohe Kapazität aufweist, ist besonders dann vorteilhaft, wenn eine hohe Anzahl an Vorrichtungen zum Auslösen einer Gasfeder vorhanden ist, wie beispielsweise in Sitzanordnungen von Flugzeugen, Bussen, Zügen oder Fähren und ein Stromnetz mit nicht allzu hohen Kapazitäten zur Verfügung steht, so dass auch bei gleichzeitiger Betätigung einer Vielzahl von Vorrichtungen ausreichend Energie zur Verfügung steht.

Bezüglich der konstruktiven Umsetzung zeichnet sich eine vorteilhafte, kompakte Ausführungsvariante, die wenig Raumbedarf beansprucht dadurch aus, dass die elektrische Magneteinheit als lineare Hubmagneteinheit mit einem Hohlspulenkörper und einem in dem Hohlspulenkörper längsverschieblich gelagerten Ankerkörper ausgebildet ist, wobei der Ankerkörper über ein Betätigungsglied mit dem Hebelmechanismus des Betätigungsorgans gekoppelt ist.

Die zuverlässige Funktion der Vorrichtung wird gemäß einer besonders vorteilhaften Ausgestaltung dadurch gewährleistet, dass eine elastische Einheit, insbesondere Federeinheit, vorhanden ist, unter deren Wirkung der Ankerkörper längsverschieblich vorhanden ist.

Bei dieser konstruktiven Ausführungsvariante ist in einer vorteilhaften konstruktiven Ausgestaltung das Betätigungsglied als Seil ausgebildet.

Die elastische Einheit kann beispielsweise als Druckfeder ausgebildet sein. In diesem Fall unterstützt sie die Magneteinheit im Aktivierungszustand dahingehend, dass auf den Hebelmechanismus neben der Magnetkraft auch zusätzlich die Federkraft der Druckfeder einwirkt.

Zum Schutz der Vorrichtung vor Umwelteinflüssen, Verschmutzung und Beschädigung zeichnet sich eine besonders vorteilhafte Weiterbildung dadurch aus, dass ein Betätigungseinrichtungsgehäuse vorhanden ist, in dem die Steuereinrichtung, die Magneteinheit, die Federeinheit und das Betätigungsglied, letzteres zumindest teilweise, angeordnet ist.

Eine hinsichtlich einer Vormontage besonders vorteilhafte und kompakte Ausführungsvariante zeichnet sich dadurch aus, dass das Betätigungseinrichtungsgehäuse an das Gehäuse des Betätigungsorgans angeschlossen ist und das Betätigungsglied in das Gehäuse hineinragt und an einem Betätigungshebel des Hebelmechanismus angeschlossen ist, wobei das Betätigungseinrichtungsgehäuse bevorzugt als Hohlprofil, insbesondere zylindrisches Hohlprofil, mit einer oberseitigen Anschlusskappeneinheit ausgebildet ist.

Das Betätigungseinrichtungsgehäuse kann auch beabstandet zum Gehäuse des Betätigungsorgans vorhanden sein, so dass ein verlängertes Betätigungsglied zum Einsatz kommt. Da das Betätigungsglied bevorzugt als flexibles Seil ausgebildet ist, kann somit die Anordnung des Gehäuses den jeweiligen Platzverhältnissen in der zu montierenden Position angepasst werden.

Eine besonders bevorzugte Ausgestaltung des an sich bekannten Betätigungsorgans in Verbindung mit der elektrischen Magneteinheit im Rahmen der Betätigungseinrichtung zeichnet sich dadurch aus, dass der Auslösehebel an einem Ende um eine erste ortsfeste Drehachse schwenkbar angelenkt und an seinem anderen Ende mit einem zweiten Hebel - Verbindungshebel - an dessen Ende schwenkbar verbunden ist, der Verbindungshebel an einem anderen Ende schwenkbar mit einem dritten Hebel - Betätigungshebel - verbunden ist und dass der Betätigungshebel an einem Ende um eine zweite ortsfeste Drehachse schwenkbar angelenkt und an seinem anderen Ende mit der Betätigungseinrichtung wirkverbunden ist.

Eine Sitzeinheit beziehungsweise eine Anordnung von mehreren Sitzeinheiten zeichnet sich dadurch aus, dass die erfindungsgemäße Vorrichtung zum Auslösen der Gasfeder und eine De-/Aktivierungseinheit vorhanden ist, die mit der erfindungsgemäßen Vorrichtung in Kommunikationsverbindung steht und mittels derer die Energieversorgung der Vorrichtung de- beziehungsweise aktivierbar ist und dass jede Sitzeinheit mit einer zentralen De-/Aktivierungseinheit in Kommunikationsverbindung steht.

Dadurch, dass die Energieversorgung jeder Vorrichtung unabhängig von der Schalteinheit über die De-/Aktivierungseinheit aktiviert beziehungsweise deaktiviert werden kann, wird erhöhten Sicherheitsanforderungen genügt. Dadurch kann beispielsweise ausgeschlossen werden, dass die Rücklehne eines Sitzes durch den Benutzer verstellt werden kann in Situationen, in denen dies nicht erlaubt ist, beispielsweise in der Start- beziehungsweise Landephase von Flugzeugen. Die Sitzanordnung in Flugzeugen ist von erheblich wirtschaftlicher Bedeutung. Bisher ist im Bereich von Notausgängen ein vergrößerter Abstand der Sitzreihen erforderlich um auch dann noch genügend Raum im Notfall zur Verfügung zu stellen, wenn ein Passagier in diesem Bereich unzulässiger Weise seinen Sitz in die ausgefahrene Rückenlehnposition bringt. Zwar werden die Passagiere aufgefordert beim Start beziehungsweise Ladeanflug ihre Rückenlehne in die aufrechte Position zu fahren, was von den Stewardessen auch kontrolliert wird, jedoch besteht das Risiko, dass ein Passagier noch nach dem Kontrollgang die Rücklehne wieder in die Ausfahrposition bringt, wobei dann gerade im Notausgangsbereich der Raumbedarf eingeschränkt wird. Dieses Sicherheitsrisiko wird durch die erfindungsgemäße Sitzeinheit beziehungsweise Sitzanordnung in Verbindung mit der zentralen De-/Aktivierungseinheit ausgeschaltet, indem die Spannungsversorgung der einzelnen Vorrichtungen zentral deaktiviert werden kann. Insoweit besteht die Möglichkeit, die Sitzabstände im Bereich der Notausgänge zu verringern, da das Risiko einer unzulässigen Rückenlehnverstellung in der Start- und Landephase nicht mehr besteht, wodurch insgesamt mehr Sitzeinheiten in der Innenkabine eines Flugzeuges angeordnet werden können, was den wirtschaftlichen Betrieb deutlich erhöht.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Längsschnitt durch eine Vorrichtung zum Auslösen einer Gasfeder mit einem Betätigungsorgan mit Hebelmechanismus und einer Betätigungseinrichtung, die eine elektrische Magneteinheit und eine Steuereinrichtung aufweist, im Längsschnitt im aktivierten Zustand,
- Fig. 2: schematischer Querschnitt der Vorrichtung gemäß Fig. 1,
- Fig. 3: schematischer Längsschnitt durch eine Vorrichtung zum Auslösen einer Gasfeder mit einem Betätigungsorgan mit Hebelmechanismus und einer Betätigungseinrichtung, die eine elektrische Magneteinheit und eine Steuereinrichtung aufweist, im Längsschnitt im nicht aktivierten Zustand,
- Fig. 4: schematischer Querschnitt der Vorrichtung gemäß Fig. 3,
- Fig. 5: stark schematisierte Schnittdarstellung einer Sitzeinheit mit unter Wirkung einer Gasfeder verstellbarer Rückenlehne mit einer Vorrichtung zum Auslösen der Gasfeder und
- Fig. 6: schematische Draufsicht auf den Ausschnitt einer Sitz-anordnung mit mehreren Sitzeinheiten gemäß Fig. 5 und einer zentralen De-/Aktivierungseinheit.

### WEGE ZUM AUSFÜHREN DER ERFINDUNG

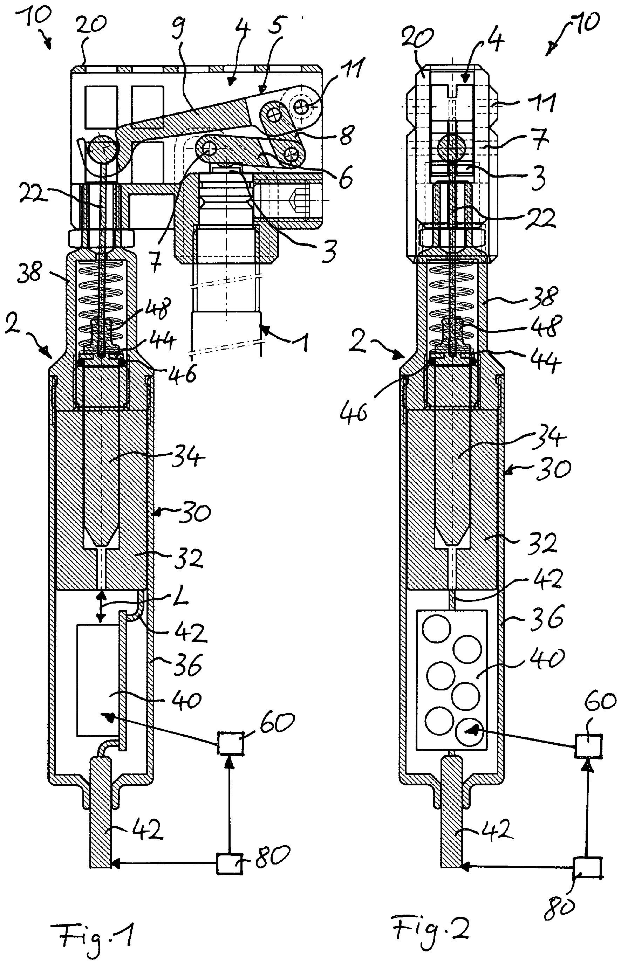

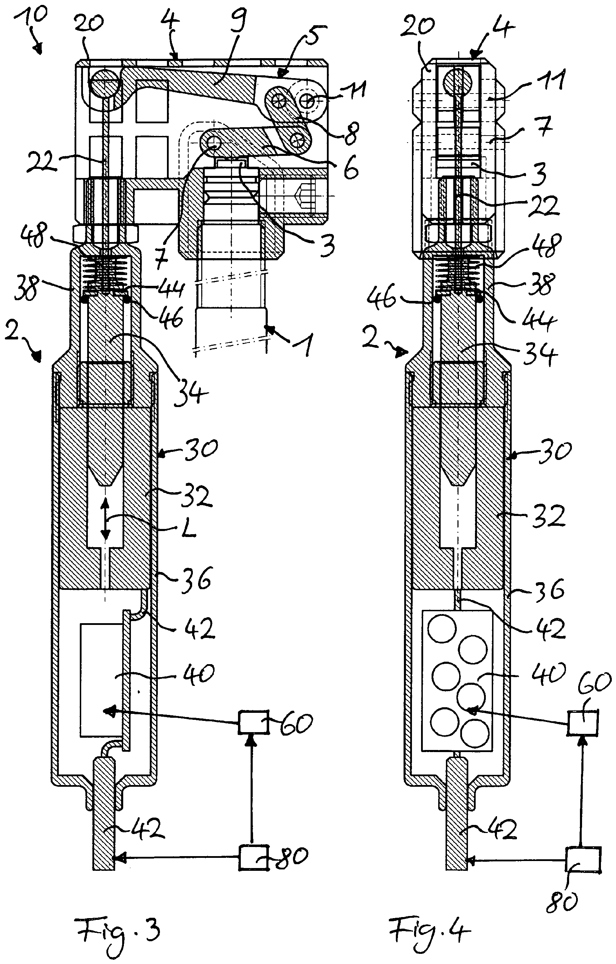

Die Figuren 1 bis 4 zeigen eine Vorrichtung zum Auslösen einer Gasfeder 1, wobei die Gasfeder 1 nur endseitig dargestellt ist und die Figuren 1 und 2 die Vorrichtung 10 im aktivierten Zustand und die Figuren 3 und 4 die Vorrichtung 10 im nicht aktivierten Zustand zeigen.

Die Vorrichtung 10 weist eine Betätigungseinrichtung 2 und ein mit der Betätigungseinrichtung 2 wirkverbundenes, unmittelbar auf den endseitigen Auslöser 3 der Gasfeder 1 wirkendes Betätigungsorgan 4 auf. Das Betätigungsorgan 4 ist als kraft- und/oder wegmäßig unter- oder übersetzende Hebelanordnung 5 ausgeführt, wobei einer der Hebel, der sogenannte Auslösehebel 6, unmittelbar auf den Auslöser 3 drückt. Der Auslösehebel 6 ist an einem Ende um eine zweite ortsfeste Drehachse 7 schwenkbar angelegt und an seinem anderen Ende mit einem zweiten Hebel, dem sogenannten Verbindungshebel 8, an dessen Ende schwenkbar verbunden. Der Verbindungshebel 8 ist an seinem anderen Ende schwenkbar mit einem dritten Hebel, dem sogenannten Betätigungshebel 9, verbunden. Der Betätigungshebel 9 ist an seinem einen Ende um eine erste ortsfeste Drehachse 11 schwenkbar angelenkt und an seinem anderen Ende mit der Betätigungseinrichtung 2 wirkverbunden. Dieser Mechanismus 5 ist aus der EP 0 907 842 B1 bekannt.

Das Verhältnis der Hebelabschnitte einerseits des Auslösehebels 6 zwischen ortsfester zweiter Drehachse 7 und Auslöser 8 sowie zwischen Auslöser 3 und der Schwenkverbindung mit dem Verbindungshebel 8 und andererseits des Betätigungshebels 9 zwischen ortsfester erster Drehachse 11 und der Schwenkverbindung mit dem Verbindungshebel 8 sowie zwischen Schwenkverbindung mit dem Verbindungshebel 8 und dem freien Ende beziehungsweise Wirkverbindung mit der Betätigungseinrichtung 2 gibt das Maß der Unter- oder Übersetzung vor.

Das Betätigungsorgan 4 fluchtet mit der Gasfeder 1. Das Betätigungsorgan 4 ist in einem Gehäuse 20 untergeordnet.

Die Betätigungseinrichtung 2 weist ein zylindrisches Betätigungseinrichtungsgehäuse 36 auf, das oberseitig eine angeschlossene Anschlusskappeneinheit 38 besitzt, die sich in zwei Stufen verjüngt und an das Gehäuse 20 angeschlossen ist.

Innerhalb des Betätigungseinrichtungsgehäuses 36 ist eine elektrische Magneteinheit 30 angeordnet, die als Hubmagnet ausgebildet ist, mit einem Hohlspulenkörper 32, in dessen Innenhohlraum ein Ankerkörper 34 längsverschieblich in Längsrichtung L vorhanden ist.

Oberseitig ist an dem Ankerkörper 34 eine Stösseleinheit 48 vorhanden, innerhalb derer ein Betätigungsglied 22 angeschlossen ist, die durch die Anschlusskappeneinheit 38 nach außen geführt ist und innerhalb des Gehäuses 20 an den Betätigungshebel 9 des Hebelmechanismus 5 angeschlossen ist. Das Betätigungsglied 22 ist als Seil ausgebildet.

Der Ankerkörper 24 steht unter der Wirkung einer Federeinheit 24, die im Ausführungsbeispiel als Druckfeder ausgebildet ist. Die Federeinheit 24 stützt sich einerseits am Ankerkörper 34 und andererseits am gegenüberliegenden Ende an der nach innen vorspringenden Wandung der Anschlusskappeneinheit 38 ab.

Die Stösseleinheit 48 ist unterseitig auf einer Wellensicherungseinheit 44 gelagert, welche wiederum auf einer Gummiringeinheit 46 zu Dämpfungszwecken gelagert ist.

Unterhalb der Magneteinheit 30 ist innerhalb des Betätigungseinrichtungsgehäuses 36 eine Steuereinrichtung 40 vorhanden, die über ein Stromkabel 42 die elektrische Magneteinheit 30 beaufschlagt, wobei dieses Stromkabel 42 auch zu einer außenseitig vorhandenen Stromversorgung führt.

Die Steuereinrichtung 40 wird über eine in Fig. 1 schematisch dargestellte Schalteinheit 60 aktiviert.

Gleichzeitig ist in Fig. 1 schematisch eine übergeordnete zentrale De-/ Aktivierungseinheit 80 dargestellt, mittels der die Spannungsversorgung der Vorrichtung 10 fallweise de-/ aktiviert.

Die Steuereinrichtung 40 wird über die Schalteinheit 60 aktiviert und aktiviert ihrerseits die elektrische Magneteinheit 30. Dabei ist die Steuerungseinrichtung 40 im dargestellten Ausführungsbeispiel so ausgestaltet, dass sie die Magneteinheit 30 für beispielsweise 5 ms mit 20 V ansteuert (Übersteuerungsphase) und danach die Spannung auf 6 V abfällt (Haltephase). Dadurch ist ein zuverlässiges Auslösen der Gasfeder 1 gewährleistet.

In den Figuren 3 und 4 ist der nicht aktivierte Zustand dargestellt. Der Ankerkörper 34 befindet sich in oberer ausgefahrener Position unter der Wirkung der Federeinheit 24. Über den Hebelmechanismus 5 des Betätigungsorgans 4 wird kein Druck auf den Auslöser 3 der Gasfeder 1 ausgeübt. Die Gasfeder 1 ist in diesem Zustand nicht aktiviert. Somit ist das in den Figuren 3 und 4 nicht näher dargestellte verstellbare Bauteil, an das die Kolbenstange der Gasfeder 1 angeschlossen ist, in seiner Lage arretiert. Wird nun die Betätigungseinrichtung 2 durch Betätigung der Schalteinheit 60 aktiviert, beaufschlagt die Steuereinrichtung 40 den Hohlspulenkörper 32 der Magneteinheit 30 mit Spannung, so dass aufgrund des sich dadurch aufbauenden Magnetfeldes der Ankerkörper 34 in Längsrichtung L mit unterstützender Wirkung der Federeinheit 24 nach unten bewegt und in den Innenhohlraum des Hohlspulenkörpers 32 einfährt. Dieser Zustand ist in den Figuren 1 und 2 dargestellt. Dadurch wird der Betätigungshebel 9 um die erste ortsfeste Drehachse 11 entgegen des Uhrzeigersinnes gedreht, so dass der Auslösehebel 6 aufgrund der Kopplung mit dem Verbindungshebel 8 eine Drehung um die zweite Drehachse 7 im Uhrzeigersinn durchführt und den Auslöser 3 der Gasfeder 1 betätigt, wodurch das an die Kolbenstange der Gasfeder 1 angeschlossene Bauteil bewegt werden kann. Sobald die Magneteinheit 30 deaktiviert wird, wird durch die Rückstellkraft der Gasfeder 1 über den Hebelmechanismus 5 der Betätigungshebel 9 im Uhrzeigersinn um die erste Drehachse 11 gedreht und der Ankerkörper 34 fährt entgegen der Wirkung der Federeinheit 24 in die in Fig. 3 und 4 dargestellte ausgefahrene Position. In diesem Zustand wird kein Druck über den Hebelmechanismus 5 des Betätigungsorgans 4 auf den Auslöser 3 ausgeübt und die Gasfeder 1 ist dadurch bezüglich der Bewegung ihrer Kolbenstange gesperrt, wodurch das an die Kolbenstange angeschlossene Bauteil in seiner Position fixiert ist.

Da die Übersteuerungsphase einen relativ hohen Strombedarf benötigt, was sich unter Umständen bei Vorhandensein von mehreren Verbrauchern negativ auf das Stromversorgungsnetz auswirken kann, sind erfindungsgemäß Maßnahmen zur Stromreduzierung für das Gesamtnetz bei Aktivierung der Magneteinheiten vorgesehen, die konkret als Pufferspeichereinheit ausgebildet sind, was in den Figuren nicht näher dargestellt ist. Die Pufferspeichereinheit kann beispielsweise ein Kondensator oder Akkumulator sein.

Erfindungsgemäß wird bei Aktivierung zunächst über die Steuereinrichtung 40 die Energie der Pufferspeichereinheit (des Kondensators) an die elektrische Magneteinheit 30 weitergeleitet, wodurch das Gesamtstromnetz zunächst nicht belastet wird. In der Haltephase ist die durch das Stromnetz zur Verfügung gestellte Energie ausreichend. Gleichzeitig sorgt die Steuereinrichtung 40 dafür, dass die Pufferspeichereinheit wieder aufgeladen wird und beim nächsten Aktivierungsvorgang wieder zur Verfügung steht.

Ergänzend kann eine zweite Pufferspeichereinheit, beispielsweise Kondensator oder Akkumulator, vorhanden sein, der direkt an die Spannungsversorgung angeschlossen ist und der eine hohe Kapazität aufweist und aus dem die elektrische Energie in der Übersteuerungsphase abgezogen werden kann. Diese zweite Pufferspeichereinheit kann beispielsweise an mehrere Vorrichtungen angeschlossen sein und vermindert das Risiko einer Überlastung des Stromnetzes zuverlässig.

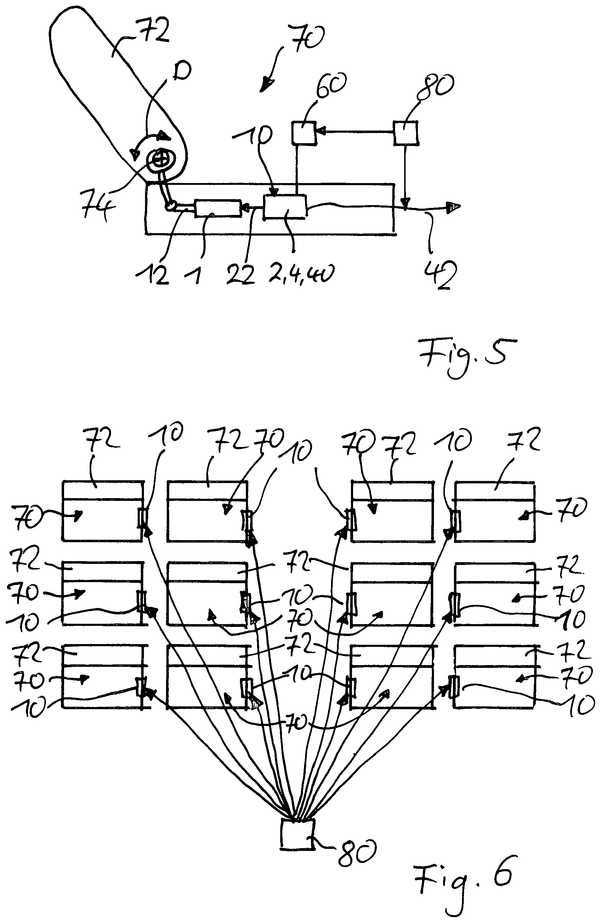

In Fig. 5 ist stark schematisiert eine Sitzeinheit 70 dargestellt, die eine um eine Drehachse 74 in Drehrichtung D schwenkbare Rückenlehne 72 aufweist. Die Drehbewegung der Rückenlehne 72 ist an die Kolbenstange 12 der Gasfeder 1 gekoppelt, das heißt eine Drehung der Rückenlehne 72 ist nur möglich, wenn die Gasfeder 1 durch Aus- und Einfahren ihrer Kolbenstange 12 diese Drehung D erlaubt beziehungsweise über die Vorrichtung 10 durch Betätigung der Schalteinheit 60 aktiviert wird. Derartige Rückenlehnen werden beispielsweise im Flugzeugbau mit dem Fachbegriff "backrest recline" bezeichnet.

In Fig. 6 ist schematisch in einer Draufsicht eine Anordnung von mehreren Sitzeinheiten 70 dargestellt, wie sie beispielsweise in der Innenkabine eines Flugzeuges vorhanden sein kann. Jede Vorrichtung 10 steht mit der übergeordneten De-/Aktivierungseinheit 80 in Kommunikationsverbindung - entweder über eine Drahtverbindung oder eine drahtlose Verbindung -, wobei durch Betätigung der De-/ Aktivierungseinheit 80 die Spannungsversorgung der Betätigungseinrichtung 2 der Vorrichtung 10 gezielt ab- und wieder eingeschaltet werden kann.

Die übergeordnete De-/Aktivierungseinheit 80, mittels derer die Stromversorgung gezielt unterbrochen werden kann, so dass die Schalteinheit 60 wirkungslos ist, erhöht die Sicherheit insgesamt, da in den Phasen, in den eine Betätigung der Gasfeder nicht gewollt ist, diese zuverlässig verhindert wird.

Die übergeordnete De-/Aktivierungseinheit 80 kann auch so mit der Vorrichtung 10 beziehungsweise den Vorrichtungen 10 verbunden sein, dass die Aktivierung der Vorrichtung 10 beziehungsweise der Vorrichtungen 10 über die De-/Aktivierungseinheit 80 selbst erfolgt, so dass beispielsweise sämtliche Rückenlehnen von Sitzeinheiten von Sitzanordnungen rechtzeitig zurückgestellt werden können. Dies ist beispielsweise in Sitzanordnungen in Eisenbahnen, Bussen, Schiffen (Fähren) vorteilhaft, da dadurch das Personal nicht jede einzelne Rückenlehne der Sitzeinheit vor dem Start einer Fahrt in Ausgangsposition bringen muss. In dem Bereich von Sitzeinheiten von PKW's bietet die erfindungsgemäße Vorrichtung eine preisgünstige, dauerhaft zuverlässig funktionierende, elektrisch motorfreie Sitzeinheitverstellung, was den Komfort erhöht und gleichzeitig eine wirtschaftliche Herstellung erlaubt.

Die erfindungsgemäße Vorrichtung 10 zum Auslösen einer Gasfeder kann aufgrund ihrer kompakten Geometrie bezüglich Bedienort und der Betätigungseinrichtung 2 bei unterschiedlichsten geometrischen Platzverhältnissen der umgebenden Bauteile eingesetzt werden, benötigt wenig Platz, kann wirtschaftlich hergestellt werden, variabel an die jeweiligen Anforderungen angepasst werden und gewährleistet zudem eine dauerhaft zuverlässige Funktion. Darüber hinaus können hohe Sicherheitsstandards gewährleistet werden.

## Patentansprüche

1. Vorrichtung zum Auslösen einer Gasfeder (1) mit
- einer Betätigungseinrichtung (2),
- einem mit der Betätigungseinrichtung (2) wirkverbundenen, unmittelbar auf einen endseitigen Auslöser (3) der Gasfeder (1) wirkenden Betätigungsorgan (4),
- wobei das Betätigungsorgan (4) als kraft- und/oder wegmäßig unter- oder übersetzende Hebelanordnung (5) ausgeführt ist,
- wobei einer der Hebel - Auslösehebel (6) - unmittelbar auf den Auslöser (3) drückt,
- wobei die Betätigungseinrichtung (2) eine elektrische Magneteinheit (30) aufweist, die über eine Stromversorgung mit elektrischer Energie versorgt wird und über eine Schalteinheit (60) aktivierbar ist, wobei
- eine Steuereinrichtung (40) vorhanden ist, die über die Schalteinheit (60) aktivierbar ist und die die elektrische Magneteinheit (30) in Abhängigkeit der Signale der Schalteinheit (60) aktiviert, wobei die Ansteuerung der Magneteinheit (30) derart erfolgt, dass für ein vorgegebenes Zeitintervall eine Übersteuerungsphase der Magneteinheit (30) mit erhöhter Spannung und eine anschließende Haltephase mit verminderter Spannung erzeugt wird,
- **dadurch gekennzeichnet, dass**
- die Steuereinrichtung (40) so ausgebildet ist, dass die Dauer des Zeitintervalls der Übersteuerungsphase und/oder die Höhe der Spannung im Zeitintervall der Übersteuerungsphase und/oder die Höhe der Spannung in der an die Übersteuerungsphase anschließenden Haltephase fest vorgebbar oder - abhängig vom Einsatzfall - variabel programmierbar ist.

2. Vorrichtung nach Anspruch 1,
- **dadurch gekennzeichnet, dass**
- die Vorrichtung eine erste elektrische Pufferspeichereinheit und/oder eine getrennt von der Vorrichtung an die Spannungsversorgung direkt angeschlossene zweite Pufferspeichereinheit aufweist, aus der die Steuereinrichtung (40) bei Aktivierung während der Übersteuerungsphase zumindest teilweise oder ganz die elektrische Energie für die Magneteinheit (30) abruft.

3. Vorrichtung nach Anspruch 2,
- **dadurch gekennzeichnet, dass**
- die elektrische Pufferspeichereinheit als Kondensator oder Akkumulator ausgebildet ist, der über die Steuereinrichtung beziehungsweise Spannungsversorgung nach Entladung wieder aufgeladen wird.

4. Vorrichtung nach einem oder mehreren der vorstehenden Ansprüche,
- **dadurch gekennzeichnet, dass**
- die elektrische Magneteinheit (30) als lineare Hubmagneteinheit mit einem Hohlspulenkörper (32) und einem in dem Hohlspulenkörper (32) längsverschieblich gelagerten Ankerkörper (34) ausgebildet ist, wobei der Ankerkörper (34) über ein Betätigungsglied (22) mit dem Hebelmechanismus (5) des Betätigungsorgans (4) gekoppelt ist.

5. Vorrichtung nach Anspruch 4,
- **dadurch gekennzeichnet, dass**
- eine elastische Einheit, insbesondere Federeinheit (24), vorhanden ist, unter deren Wirkung der Ankerkörper (34) längsverschieblich vorhanden ist.

6. Vorrichtung nach Anspruch 4 und 5,
- **dadurch gekennzeichnet,**
- **dass** das Betätigungsglied (22) als Seil ausgebildet ist und die elastische Einheit als Druck- oder Zugfeder (24) ausgebildet ist.

7. Vorrichtung nach einem oder mehreren der vorstehenden Ansprüche,
- **dadurch gekennzeichnet, dass**
- ein Betätigungseinrichtungsgehäuse (36) vorhanden ist, in dem die Steuereinrichtung (40) und die Magneteinheit (30) und gegebenenfalls die Federeinheit (24) und das Betätigungsglied (22), letzteres zumindest teilweise, angeordnet ist.

8. Vorrichtung nach Anspruch 7,
- **dadurch gekennzeichnet, dass**
- das Betätigungseinrichtungsgehäuse (36) direkt an dem oder beabstandet zum Gehäuse (20) des Betätigungsorgans (4) vorhanden ist und das Betätigungsglied (22) in das Gehäuse (20) hineinragt und an einem Betätigungshebel (9) des Hebelmechanismus (5) angeschlossen ist.

9. Vorrichtung nach Anspruch 7 und 8,
- **dadurch gekennzeichnet, dass**
- das Betätigungseinrichtungsgehäuse (36) als Hohlprofil, insbesondere zylindrisches Hohlprofil, mit einer oberseitigen Anschlusskappeneinheit (38) zum Anschluss an das Gehäuse (20) ausgebildet ist.

10. Vorrichtung nach einem oder mehreren der vorstehenden Ansprüche,
- **dadurch gekennzeichnet, dass**
- der Auslösehebel (6) an einem Ende um eine erste ortsfeste Drehachse (11) schwenkbar angelenkt und an seinem anderen Ende mit einem zweiten Hebel - Verbindungshebel (8) - an dessen Ende schwenkbar verbunden ist, der Verbindungshebel (8) an einem anderen Ende schwenkbar mit einem dritten Hebel - Betätigungshebel (9) - verbunden ist und dass der Betätigungshebel (9) an einem Ende um eine zweite ortsfeste Drehachse (7) schwenkbar angelenkt und an seinem anderen Ende mit der Betätigungseinrichtung (2) wirkverbunden ist.

11. Sitzeinheit (70) mit einer um eine Drehachse (74) drehbaren (D) Rückenlehne ("backrest recline") (72), wobei die Drehbewegung unter Einfluss einer Gasfeder (1) in ihrer jeweiligen Drehposition arretierbar ist, **gekennzeichnet durch** eine Vorrichtung zum Auslösen der Gasfeder nach einem oder mehreren der vorstehenden Ansprüche.

12. Sitzeinheit nach Anspruch 11,
- **dadurch gekennzeichnet, dass**
- eine getrennt zentrale De-/Aktivierungseinheit (80) vorhanden ist, die mit der Vorrichtung (10) in Kommunikationsverbindung steht und mittels derer die Energieversorgung der Vorrichtung de- beziehungsweise aktivierbar ist und/oder die Schalteinheit (60) aktivierbar ist.

13. Anordnung mit mehreren Sitzeinheiten nach Anspruch 11 oder 12, insbesondere innerhalb einer Innenkabine eines Flugzeuges,
- **dadurch gekennzeichnet, dass**
- jede Sitzeinheit (70) mit der zentralen De-/ Aktivierungseinheit (80) in Kommunikationsverbindung s steht.

## Claims

1. A device for triggering a gas spring (1), comprising
- an actuating device (2),
- an actuating member (4) which is operatively connected to the actuating device (2) and acts directly on an end-side trigger (3) of the gas spring (1),
- wherein the actuating member (4) is designed as a lever arrangement (5) which reduces or multiplies in terms of force and/or travel,
- wherein one of the levers - triggering lever (6) - pushes directly onto the trigger (3),
- wherein the actuating device (2) has an electric magnet unit (30) which is supplied with electrical energy via a current supply and can be activated via a switching unit (60), wherein
- there is a control device (40) which can be activated via the switching unit (60) and which activates the electric magnet unit (30) depending on the signals of the switching unit (60), wherein the magnet unit (30) is activated in such a manner that, for a predetermined interval of time, an override phase of the magnet unit (30) with an increased voltage and a subsequent holding phase with a reduced voltage is generated,
- **characterized in that**
- the control device (40) is designed in such a manner that the duration of the interval of time of the override phase and/or the magnitude of the voltage in the interval of time of the override phase and/or the magnitude of the voltage in the holding phase subsequent to the override phase can be fixedly predetermined or can be programmed variably - depending on the application.

2. The device as claimed in claim 1,
- **characterized in that**
- the device has a first electric buffer storage unit and/or a second buffer storage unit which is directly connected to the voltage supply separately from the device and from which the control device (40), upon activation during the override phase, at least partially or entirely retrieves the electrical energy for the magnet unit (30).

3. The device as claimed in claim 2,
- **characterized in that**
- the electric buffer storage unit is designed as a capacitor or accumulator which, after discharge, is charged up again via the control device or voltage supply.

4. The device as claimed in one or more of the preceding claims,
- **characterized in that**
- the electric magnet unit (30) is designed as a linear lifting magnet unit with a hollow coil body (32) and an armature body (34) which is mounted in a longitudinally displaceable manner in the hollow coil body (32), wherein the armature body (34) is coupled to the lever mechanism (5) of the actuating member (4) via an actuating element (22).

5. The device as claimed in claim 4,
- **characterized in that**
- there is an elastic unit, in particular spring unit (24), under the action of which the armature body (34) is present in a longitudinally displaceable manner.

6. The device as claimed in claim 4 and 5,
- **characterized**
- **in that** the actuating element (22) is designed as a cable, and the elastic unit is designed as a compression or tension spring (24).

7. The device as claimed in one or more of the preceding claims,
- **characterized in that**
- there is an actuating device housing (36) in which the control device (40) and the magnet unit (30) and optionally the spring unit (24) and the actuating element (22), the latter at least partially, are arranged.

8. The device as claimed in claim 7,
- **characterized in that**
- the actuating device housing (36) is present directly on or spaced apart from the housing (20) of the actuating member (4) and the actuating element (22) projects into the housing (20) and is connected to an actuating lever (9) of the lever mechanism (5).

9. The device as claimed in claim 7 and 8,
- **characterized in that**
- the actuating device housing (36) is designed as a hollow profile, in particular cylindrical hollow profile, with an upper-side connection cap unit (38) for connection to the housing (20).

10. The device as claimed in one or more of the preceding claims,
- **characterized in that**
- the triggering lever (6) is coupled at one end so as to be pivotable about a first positionally fixed axis of rotation (11) and pivotably connected at its other end to a second lever - connecting lever (8) - at the end thereof, the connecting lever (8) being connected pivotably at another end to a third lever - actuating lever (9), and **in that** the actuating lever (9) is coupled at one end so as to be pivotable about a second positionally fixed axis of rotation (7) and is operatively connected at its other end to the actuating device (2).

11. A seating unit (70) with a backrest ("backrest recline") (72) which is rotatable (D) about an axis of rotation (74), wherein the rotational movement can be arrested in its respective rotational position under the influence of a gas spring (1), **characterized by** a device for triggering the gas spring as claimed in one or more of the preceding claims.

12. The seating unit as claimed in claim 11,
- **characterized in that**
- there is a separate central deactivation/activation unit (80) which is connected in terms of communication to the device (10) and by means of which the energy supply of the device can be deactivated or activated and/or the switching unit (60) can be activated.

13. An arrangement comprising a plurality of seating units as claimed in claim 11 or 12, in particular inside an interior cabin of an aircraft,
- **characterized in that**
- each seating unit (70) is connected in terms of communication to the central deactivation/activation unit (80).

## Revendications

1. Système de déclenchement d'un ressort à gaz (1), comprenant
- un dispositif d'actionnement (2),
- un organe d'actionnement (4) en liaison fonctionnelle avec le dispositif d'actionnement (2) et agissant directement sur un déclencheur (3) côté d'extrémité du ressort à gaz (1),
- l'organe d'actionnement (4) étant réalisé sous la forme d'un arrangement de levier (5) à démultiplication ou surmultiplication par effet de force et/ou de course,
- l'un des leviers, le levier de déclenchement (6), appuyant directement sur le déclencheur (3),
- le dispositif d'actionnement (2) possédant une unité électromagnétique (30) qui est alimentée en énergie électrique par le biais d'une alimentation électrique et qui peut être activée par le biais d'une unité de commutation (60),
- un dispositif de commande (40) étant présent, lequel peut être activé par le biais de l'unité de commutation (60) et active l'unité électromagnétique (30) en fonction des signaux de l'unité de commutation (60), l'excitation de l'unité électromagnétique (30) s'effectuant de telle sorte qu'une phase de surcharge de l'unité électromagnétique (30) avec une tension accrue et ensuite une phase d'arrêt avec une tension réduite sont générées pendant un intervalle de temps prédéfini,
- **caractérisé en ce que**
- le dispositif de commande (40) est configuré de telle sorte que la durée de l'intervalle de temps de la phase de surcharge et/ou l'amplitude de la tension dans l'intervalle de temps de la phase de surcharge et/ou l'amplitude de la tension dans la phase d'arrêt qui suit la phase de surcharge peut être prédéfinie à une valeur fixe ou, suivant l'application, peut être programmée variable.

2. Système selon la revendication 1,
- **caractérisé en ce que**
- le système possède une première unité de stockage tampon d'électricité et/ou une deuxième unité de stockage tampon d'électricité séparée du système et raccordée directement à l'alimentation électrique, depuis laquelle le dispositif de commande (40) extrait partiellement ou entièrement l'énergie électrique pour l'unité magnétique (30) lors de l'activation durant la phase de surcharge.

3. Système selon la revendication 2,
- **caractérisé en ce que**
- l'unité de stockage tampon d'électricité est réalisée sous la forme d'un condensateur ou d'un accumulateur qui est rechargé par le biais du dispositif de commande ou l'alimentation électrique après la décharge.

4. Système selon une ou plusieurs des revendications précédentes,
- **caractérisé en ce que**
- l'unité électromagnétique (30) est réalisée sous la forme d'un corps de bobine creux (32) et d'un corps d'induit (34) monté en coulissement longitudinal dans le corps de bobine creux (32), le corps d'induit (34) étant accouplé au mécanisme de levier (5) de l'organe d'actionnement (4) par le biais d'un élément d'actionnement (22).

5. Système selon la revendication 4,
- **caractérisé en ce que**
- une unité élastique, notamment une unité à ressort (24) est présente, sous l'effet de laquelle le corps d'induit (34) peut coulisser longitudinalement.

6. Système selon la revendication 4 et 5,
- **caractérisé en ce que**
- l'élément d'actionnement (22) est réalisé sous la forme d'un câble et l'unité élastique est réalisée sous la forme d'un ressort de compression ou de traction (24).

7. Système selon une ou plusieurs des revendications précédentes,
- **caractérisé en ce que**
- un boîtier de dispositif d'actionnement (36) est présent, dans lequel sont disposés le dispositif de commande (40) et l'unité magnétique (30), et le cas échéant l'unité à ressort (24) et l'élément d'actionnement (22), ce dernier au moins partiellement.

8. Système selon la revendication 7,
- **caractérisé en ce que**
- le boîtier de dispositif d'actionnement (36) se trouve directement au niveau, ou espacé, du boîtier (20) de l'organe d'actionnement (4) et l'élément d'actionnement (22) fait saillie à l'intérieur du boîtier (20) et est raccordé à un levier d'actionnement (9) du mécanisme à levier (5).

9. Système selon la revendication 7 et 8,
- **caractérisé en ce que**
- le boîtier de dispositif d'actionnement (36) est réalisé sous la forme d'un profilé creux, notamment d'un profilé creux cylindrique, pourvu d'une unité de coiffe de raccordement (38) côté supérieur servant au raccordement au boîtier (20).

10. Système selon une ou plusieurs des revendications précédentes,
- **caractérisé en ce que**
- le levier de déclenchement (6) est articulé au niveau d'une extrémité de manière à pivoter autour d'un premier axe de rotation (11) fixe et, au niveau de son autre extrémité, relié pivotant à l'extrémité d'un deuxième levier, le levier de liaison (8), le levier de liaison (8) étant relié pivotant par son autre extrémité à un troisième levier, le levier d'actionnement (9), et **en ce que** le levier d'actionnement (9) est articulé au niveau d'une extrémité de manière à pivoter autour d'un deuxième axe de rotation (7) fixe et, au niveau de son autre extrémité, en liaison fonctionnelle avec le dispositif d'actionnement (2).

11. Unité de siège (70) comprenant un dossier (72) pouvant pivoter (D) autour d'un axe de rotation (74) (« inclinaison du dossier »), le mouvement de rotation pouvant être bloqué dans sa position de rotation respective sous l'influence d'un ressort à gaz (1), **caractérisé par** un système de déclenchement d'un ressort à gaz selon une ou plusieurs des revendications précédentes.

12. Unité de siège selon la revendication 11,
- **caractérisée en ce que**
- une unité de désactivation/activation (80) centrale séparée est présente, laquelle est en liaison de communication avec le système (10) et au moyen de laquelle peut être désactivée ou activée l'alimentation en énergie du système et/ou l'unité de commutation (60) peut être activée.

13. Arrangement comprenant plusieurs unités de siège selon la revendication 11 ou 12, notamment à l'intérieur d'une cabine intérieure d'un aéronef,
- **caractérisé en ce que**
- chaque unité de siège (70) se trouve en liaison de communication avec l'unité de désactivation/activation (80) centrale.
